(19) Europäisches Patentamt
European Patent Office
Office européen des brevets

(11) Veröffentlichungsnummer: **0 042 530**
**B1**

(12) # EUROPÄISCHE PATENTSCHRIFT

(45) Veröffentlichungstag der Patentschrift: **15.02.84**

(51) Int. Cl.³: **C 01 B 17/45**

(21) Anmeldenummer: **81104424.7**

(22) Anmeldetag: **10.06.81**

(54) **Verfahren zur Reinigung von Thionylchlorid.**

(30) Priorität: **19.06.80 DE 3022879**

(43) Veröffentlichungstag der Anmeldung: **30.12.81 Patentblatt 81/52**

(45) Bekanntmachung des Hinweises auf die Patenterteilung: **15.02.84 Patentblatt 84/7**

(84) Benannte Vertragsstaaten: **CH DE FR GB LI**

(56) Entgegenhaltungen:
**DE - A - 2 430 631**
**GB - A - 1 272 768**
**US - A - 2 529 671**
**US - A - 2 539 679**
**US - A - 3 155 457**
**US - A - 3 592 593**

(73) Patentinhaber: **BAYER AG, Zentralbereich Patente, Marken und Lizenzen, D-5090 Leverkusen 1, Bayerwerk (DE)**

(72) Erfinder: **Jonas, Gerhard, Dr., Gellertstrasse 5, D-5090 Leverkusen (DE)**

EP 0 042 530 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Verfahren zur Reinigung von Thionylchlorid

Die vorliegende Erfindung betrifft ein Verfahren zur Reinigung von Thionylchlorid mittels Aluminiumchlorid.

Thionylchlorid wird technisch hergestellt, indem Schwefeldioxid oder Schwefeltrioxid mit Chlor und Schwefelchloriden gemäss folgenden Reaktionsgleichungen zur Umsetzung gebracht werden:

$$S_2Cl_2 + 2SO_2 + 3Cl_2 \rightleftarrows 4SOCl_2 \quad (I)$$

$$2SCl_2 + 2SO_2 + 2Cl_2 \rightleftarrows 4SOCl_2 \quad (II)$$

$$S_2Cl_2 + SO_3 + 2Cl_2 \rightarrow 3SOCl_2 \quad (III)$$

$$2SCl_2 + SO_3 + Cl_2 \rightarrow 3SOCl_2 \quad (IV)$$

Anstelle von Schwefeldioxid und Chlor kann auch Sulfurylchlorid gemäss Gleichung (II) eingesetzt werden, da Sulfurylchlorid im Gleichgewicht mit Schwefeldioxid und Chlor steht:

$$SO_2Cl_2 \rightleftarrows SO_2 + Cl_2 \quad (V)$$

Die bekannten Verfahren, die auf den Reaktionen (I) bis (IV) beruhen, werden z.B. in den deutschen Patentschriften Nrn. 803411, 842041, 939571, 136870, 139455 und in der US-Patentschrift Nr. 2431823 beschrieben. Die Umsetzung der gasförmigen Ausgangsstoffe erfolgt durch Kontakt mit Aktivkohle, bei Temperaturen zwischen 160 und 300° C.

Das anfallende Rohgasgemisch wird kondensiert, die bei üblicher Kühlmitteltemperatur nicht kondensierbaren Anteile an Schwefeldioxid und Chlor werden gasförmig oder flüssig als Sulfurylchlorid (V) den Ausgangsstoffen wieder zugegeben. Das rohe Thionylchlorid hat je nach Umsetzungsbedingungen etwa folgende Zusammensetzung:

| | |
|---|---|
| 65-85% | Thionylchlorid |
| 10-25% | Schwefeldichlorid und Dischwefeldichlorid |
| 0,5-3% | Schwefeldioxid |
| 1-12% | Chlor |
| 0,05-0,5% | Sulfurylchlorid |

Die Abtrennung der vorgenannten Verunreinigungen Schwefeldichlorid und Sulfurylchlorid durch Destillation des Rohthionylchlorids ist praktisch nicht möglich, da sowohl das Schwefeldichlorid tiefer (ca. 20°) als auch das Sulfurylchlorid (ca. 10°) als das Thionylchlorid sieden.

Die teilweise Reindarstellung des Rohthionylchlorids gelingt jedoch durch Abtrennung des Schwefeldichlorids und des Chlors durch Reaktion mit Schwefel, z.B. nach der US-Patentschrift US-A Nr. 3155457 gemäss

$$SCl_2 + S \rightarrow S_2Cl_2 \quad (VI)$$

und

$$Cl_2 + S_2 \rightarrow S_2Cl_2 \quad (VII)$$

Die vorstehenden Reaktionen können durch Zugabe von Katalysatoren, insbesondere Eisensalzen, katalysiert werden, vgl. US-A Nr. 3592593 oder auch britische Patentschrift GB-A Nr. 1272768. Die Zugabe von Eisen bzw. von Eisensalzen ergibt zwar eine verbesserte Reinigungswirkung, doch ist insbesondere die Zersetzung von Sulfurylchlorid nicht ausreichend.

Überraschenderweise wurde nun gefunden, dass Aluminiumchlorid nicht nur auf die Reaktionen VI und VII einen günstigen katalytischen Einfluss ausüben, sondern auch das Sulfurylchlorid im Thionylchlorid weitgehend zu Schwefeldioxid und Chlor spalten (Reaktion V).

Gegenstand der vorliegenden Erfindung ist daher ein Verfahren zur Reinigung von Thionylchlorid unter Zugabe von Schwefel in Gegenwart von Katalysatoren, welches dadurch gekennzeichnet ist, dass dem flüssigen Thionylchlorid vor und/oder während der destillativen Aufarbeitung Schwefel und Aluminiumchlorid zugesetzt werden.

Der Schwefel wird dabei in fester, flüssiger oder gelöster Form in Mengen von 1 bis 15 Gew.-%, vorzugsweise 2,5 bis 7 Gew.-%, besonders bevorzugt von 4 bis 6 Gew.-%, bezogen auf Thionylchlorid, zugesetzt.

Das Aluminiumchlorid kann in kristallwasserhaltiger, bevorzugt jedoch in wasserfreier Form zugefügt werden. Es reichen bereits geringe Mengen an Aluminiumchlorid aus, d.h. 0,01 bis 1 Gew.-%, bevorzugt 0,01 bis 0,5 Gew.-% und besonders bevorzugt 0,02 bis 0,05 Gew.-% Aluminiumchlorid, berechnet als Aluminium und bezogen auf Thionylchlorid.

In einer Ausführungsform des Verfahrens werden dem Rohthionylchlorid der Schwefel und das Aluminiumchlorid vor der Destillation zugemischt und die Mischung dann ca. 5 bis 120 min, vorzugsweise 10 bis 60 min lang bei Temperaturen von 15 bis 80° C, vorzugsweise bei 50 bis 60° C behandelt. Anschliessend erfogt dann die übliche Destillation.

In den meisten Fällen ist bereits eine einmalige Behandlung des Thionylchlorids unter den erfindungsgemässen Bedingungen ausreichend, in anderen Fällen und um zu einer noch grösseren Reinheit des Thionylchlorid zu gelangen, kann die Behandlung je nach Bedarf wiederholt werden. Das erfindungsgemässe Verfahren liefert sehr reines Thionylchlorid mit einem Gehalt von mindestens 99,7%.

Gegenüber der bekannten Verwendung von Eisenverbindungen besitzt Aluminiumchlorid grosse Vorteile.

Neben dem günstigen katalytischen Einfluss auf die Reaktionen VI und VII wird auch Sulfurylchlorid zu Schwefeldioxid und Chlor gespalten, letzteres wird durch Schwefel in Schwefelmonochlorid übergeführt, während das $SO_2$ als solches während der Destillation entfernt wird. Insbesondere bildet das verwendete Aluminiumchlorid nichtflüchtige, leicht spaltbare Komplexe im System, so dass dem Rohthionylchlorid nur sehr kleine Mengen zugesetzt werden müssen, da praktisch keine Verluste auftreten. Während der

Destillation des rohen Thionylchlorids reichert sich das Aluminiumchlorid zusammen mit dem Schwefelmonochlorid im Sumpf der Kolonne an und kann bei entsprechender Kreislaufführung des Schwefelmonochlorids über die Rohthionylchlorid-Herstellung wiederverwendet werden.

In einer bevorzugten Ausführungsform des Verfahrens wird daher ein Teilstrom des Schwefelmonochlorids zusammen mit dem Aluminiumchlorid dem zu destillierenden Rohthionylchlorid wieder zugesetzt. Dabei wird bevorzugt das Rothionylchlorid in einem der Destillationskolonne vorgelagerten beheizbaren Behälter mit einem Teil des notwendigen Schwefels und dem aluminiumhaltigen Schwefelmonochlorid vermischt, wobei ein wesentlicher Teil des Schwefeldichlorids und des Sulfurylchlorids zersetzt werden. Der weitere Anteil des Schwefels und des Aluminiumchlorids, eventuell wieder in Form der $AlCl_3-S_2/Cl_2$-Mischung, wird während der Destillation zugefügt.

Das vorstehend beschriebene Verfahren soll durch die folgenden Beispiele noch näher erläutert werden:

*Beispiel 1:*

Einem Gemisch von 939 g Thionylchlorid, 241 g Schwefeldichlorid, 48 g Chlor, 26 g Schwefeldioxid, 60 g Sulfurylchlorid und 100 g Schwefel wurden 1 g Aluminiumchlorid wasserfrei zugesetzt und die Mischung ca. 20 min zum Sieden erhitzt. Danach wurde über eine Destillationskolonne abdestilliert. Das Kopfprodukt wurde erneut mit ca. 50 g Schwefel und 0,1 g Aluminiumchlorid wasserfrei versetzt und über eine weitere Kolonne rektifiziert. Das Destillat enthielt: 1,82 g Schwefeldichlorid (0,19%) und kein Sulfurylchlorid.

*Beispiel 2:*

Einem Gemisch von 1000 g Thionylchlorid, 200 g Schwefeldichlorid, 46 g Dischwefeldichlorid, 3,75 g Sulfurylchlorid und 100 g Schwefel wurde 1 g Aluminiumchlorid wasserfrei zugesetzt. Die Aufarbeitung des Gemisches erfolgte wie im Beispiel 1 beschrieben. Das Destillat enthielt: 0,21 g Schwefeldichlorid (0,02%) und 0,4 g Sulfurylchlorid (0,04%).

*Beispiel 3:*

Einem Gemisch wie in Beispiel 2 wurden 10 g Aluminiumchlorid wasserfrei zugesetzt. Die Aufarbeitung erfolgte analog zu Beispiel 1. Das Destillat enthielt: 0,32 g Schwefeldichlorid (0,032%) und kein Sulfurylchlorid.

## Patentansprüche

1. Verfahren zur Reinigung von Thionylchlorid unter Zugabe von Schwefel in Gegenwart von Katalysatoren, dadurch gekennzeichnet, dass dem flüssigen Thionylchlorid vor und/oder während der destillativen Aufarbeitung Schwefel und Aluminiumchlorid zugesetzt werden.

2. Verfahren nach Anspruch 1, dadurch gekennzeichnet, dass der Schwefel in fester, flüssiger oder gelöster Form in Mengen von 1 bis 15 Gew.-%, vorzugsweise 2,5 bis 7 Gew.-% — bezogen auf Thionylchlorid — zugesetzt wird.

3. Verfahren nach einem der Ansprüche 1 oder 2, dadurch gekennzeichnet, dass Aluminiumchlorid in Mengen von 0,01 bis 1 Gew.-%, vorzugsweise 0,01 bis 0,5 Gew.-%, berechnet als Aluminium und bezogen auf Thionylchlorid, eingesetzt wird.

4. Verfahren nach einem der Ansprüche 1 bis 3, dadurch gekennzeichnet, dass die Mischung von Roththionylchlorid, Schwefel und Aluminiumchlorid vor der Destillation auf Temperaturen zwischen 15 bis 80° C, vorzugsweise 50 bis 60° C erhitzt wird.

5. Verfahren nach einem der Ansprüche 1 bis 4, dadurch gekennzeichnet, dass Aluminiumchlorid im Gemisch mit Schwefelmonochlorid zugesetzt wird.

## Revendications

1. Procédé de purification du chlorure de thionyle par addition de soufre en présence de catalyseurs, procédé caractérisé en ce qu'on ajoute au chlorure de thionyle liquide, avant et/ou pendant le traitement d'élaboration par distillation, du soufre et du chlorure d'aluminium.

2. Procédé selon la revendication 1, caractérisé en ce qu'on ajoute le soufre sous forme solide, liquide ou dissoute, en des quantités de 1 à 15% en poids, avantageusement 2,5 à 7% en poids, par rapport au chlorure de thionyle.

3. Procédé selon l'une des revendications 1 ou 2, caractérisé en ce qu'on utilise le chlorure d'aluminium en des quantités de 0,01 à 1% en poids, avantageusement 0,01 à 0,5% en poids, calculées en aluminium et rapportées au chlorure de thionyle.

4. Procédé selon l'une des revendications 1 à 3, caractérisé en ce que, avant la distillation, on chauffe le mélange du chlorure de thionyle brut, du soufre et du chlorure d'aluminium jusqu'à des températures comprises entre 15 et 80° C, de préférence entre 50 et 60° C.

5. Procédé selon l'une des revendications 1 à 4, caractérisé en ce qu'on ajoute le chlorure d'aluminium en mélange avec du monochlorure de soufre.

## Claims

1. Process for purifying thionyl chloride by addition of sulphur in the presence of catalysts, characterised in that sulphur and aluminium chloride are added to the liquid thionyl chloride before and/or while the mixture is worked up by distillation.

2. Process according to claim 1, characterised in that the sulphur is added in solid, liquid or dissolved form in quantities of 1 to 15% by weight, preferably 2.5 to 7% by weight — based on thionyle chloride.

3. Process according to one of claims 1 or 2,

characterised in that aluminium chloride is employed in quantities of 0.01 to 1% by weight, preferably 0.01 to 0.5% by weight, calculated as aluminium and based on thionyl chloride.

4. Process according to one of claims 1 to 3, characterised in that the mixture of crude thionyl chloride, sulphur and aluminium chloride is heated to temperatures from 15 to 80° C, preferably 50 to 60° C, prior to distillation.

5. Process according to one of claims 1 to 4, characterised in that aluminium chlorides is added in a mixture with sulphur monochloride.